# EUROPÄISCHE PATENTANMELDUNG

(11) **EP 0 959 282 A2**
(43) Veröffentlichungstag der Anmeldung: **24.11.1999**
(21) Anmeldenummer: 99109971.4
(22) Anmeldetag: 20.05.1999
(51) Int. Cl.: F16K 31/00, F16K 11/044

(54) **Ventil zur Steuerung von flüssigen oder gasförmigen Medien**

(30) Priorität: 20.05.1998 DE 19822735
(71) Anmelder: BSH Bosch und Siemens Hausgeräte GmbH, 81669 München (DE)
(72) Erfinder: Maurer, Hans-Peter Dipl.-Ing., 89168 Niederstotzingen (DE)

(57) **Zusammenfassung**

Bei einem Ventil (10) zur Steuerung von flüssigen oder gasförmigen Medien mit wenigstens einem Zuflußanschluß und zwei Abflußanschlüsse (14) aufweisenden Gehäuse (11), innerhalb welchem ein Ventilstellglied (24) beweglich geführt ist, welches über Stellmittel gesteuert in zwei Arbeitsstellungen bringbar ist, in welchen das Ventilstellglied (24) jeweils den Strömungsweg zwischen dem Zuflußanschluß (13) und einem der Abflußanschlüsse (14) freigibt, sind die Stellmittel als aus einer Form-Gedächtnis-Legierung gefertigte Federn (23) gebildet, welchen Heizmittel (12) zugeordnet sind, durch welche sie in ihre eingeprägte Form auslenkbar sind.

## Beschreibung

Die Erfindung betrifft ein Ventil zur Steuerung von flüssigen oder gasförmigen Medien, mit wenigstens einen Zuflußanschluß und zwei Abflußanschlüsse aufweisenden Gehäuse, innerhalb welchem ein Ventilstellglied beweglich geführt ist, welches über Stellmittel gesteuert in zwei Arbeitsstellungen bringbar ist, in welchen das Ventilstellglied jeweils den Strömungsweg zwischen dem Zuflußanschluß und einem der Abflußanschlüsse freigibt.

Zur Umlenkung von flüssigen oder gasförmigen Strömungsmedien werden bislang neben monostabilen auch bistabile Elektromagnetventile angewandt. Der Einsatz von monostabilen Elektromagnetventilen, z.B. in Kältegeräten, hat zur Folge, daß der Stromverbrauch des Gerätes durch diese Ventilart merklich erhöht ist, da das Ventilstellglied durch eine Feder in eine bevorzugte Arbeitsstellung gedrängt ist und nach dem Umschalten in die andere Arbeitsstellung in dieser nur durch das ständige Einwirken der von dem Elektromagnet auf das Ventilstellglied ausgeübten Kraft gehalten werden kann. Dieser Nachteil ist bei bistabilen Elektromagnetventilen dadurch vermieden, daß das anhand des Elektromagneten in seine jeweilige Arbeitsstellung gebrachte Ventilstellglied in dieser Arbeitsstellung durch die Haltekraft eines Permanentmagneten gehalten ist. Die Anwendung einer solchen Ventilart bringt jedoch mit sich, daß für das Ventilstellglied nur ferromagnetische Werkstoffe zum Einsatz gebracht werden können, während für den Träger des Permanentmagneten ferromagnetische Werkstoffe nicht möglich sind. Darüber hinaus ist bei dieser Ventilart darauf zu achten, daß das magnetische Feld des Permanentmagneten nicht durch fertigungs- oder konstruktionsbedingt auftretende Luftspalte unnötig abgeschwächt wird.

Der Erfindung liegt die Aufgabe zugrunde, bei einem Ventil gemäß dem Oberbegriff des Patentanspruches 1 mit einfachen Maßnahmen die Nachteile des Standes der Technik zu vermeiden.

Diese Aufgabe wird gemäß der Erfindung dadurch gelöst, daß die Stellmittel als aus wenigstens einer Form-Gedächtnis-Legierung gefertigten Feder gebildet sind, welcher ein Heizmittel zugeordnet ist, durch welche diese Feder in ihre eingeprägte Form auslenkbar ist.

Durch den Einsatz einer aus einer Form-Gedächtnis-Legierung gefertigten Federn zum Bewegen des Ventilstellgliedes ergibt sich ein in seiner Teilezahl verringerter einfacher Aufbau eines Ventiles, z.B. eines 3/2-Wegeventiles, bei welchem zudem prinzipbedingt die Anforderungen an die Einhaltung enger Fertigungstoleranzen im Vergleich zu den bekannten Ventiltechniken deutlich herabgesetzt sind. In Verbindung mit dem prinzipbedingt einfachen, eine verhältnismäßig geringe Teilezahl umfassenden Aufbau des Ventiles läßt sich dieses auch kostengünstig herstellen. Darüber hinaus können für das Ventilstellglied in Abkehr von der bisherigen Magnetventiltechnik verschiedenartige Werkstoffe zum Einsatz kommen, so daß hierdurch die Möglichkeit gegeben ist, den für das jeweilig zu steuernde Medium beständigsten Werkstoff auch im Hinblick auf die Werkstoffkosten auswählen zu können.

Besonders definiert in seine jeweilige Arbeitsstellung bringbar und in dieser mit einer definierten Haltekraft gehalten ist das Ventilstellglied, wenn nach einer bevorzugten Ausführungsform des Gegenstandes der Erfindung vorgesehen ist, daß zwei aus der Form-Gedächtnis-Legierung gefertigte Federn vorgesehen sind, von denen jeweils eine an einer Seite des Ventilstellgliedes angreift.

Durch eine derartige Lösung ergibt sich zudem eine besonders definierte Schließkraft für das Ventilstellglied.

Besonders einfach ausbildbar ist die Abstützung der Federn am Gehäuse einerseits und die Einleitung der Federkraft auf das Ventilstellglied andererseits, wenn nach einer nächsten bevorzugten Ausführungsform des Gegenstandes der Erfindung vorgesehen ist, daß die Federn als Spiralfedern ausgeführt sind.

Besonders einfach und kostengünstig gestaltet werden kann das Gehäuse und das Ventilstellglied, wenn nach einer weiteren vorteilhaften Ausgestaltung des Gegenstandes der Erfindung vorgesehen ist, daß die Spiralfedern als Druckfedern ausgebildet sind.

Gemäß einer nächsten bevorzugten Ausführungsform des Gegenstandes der Erfindung ist vorgesehen, daß die Federn im Zentrum der Längsachse des Ventilstellgliedes oder konzentrisch um das Zentrum der Längsachse angreifen.

Hierdurch ist ein Verkanten und somit Verklemmen des innerhalb des Gehäuses geführten Ventilstellgliedes vermieden, so daß zur Verstellung des Ventilstellgliedes im wesentlichen nur die von der jeweils entgegenwirkenden Feder ausgeübten Kräfte zu überwinden sind.

Besonders definiert einleitbar sind die von den Federn auf das Ventilstellglied ausgeübten Kräfte, wenn nach einen weiteren bevorzugten Ausführungsform des Gegenstandes der Erfindung vorgesehen ist, daß das Ventilstellglied mit federtellerähnlichen Krafteinleitungsflächen für die Federn ausgestattet ist.

Eine besonders einfache Art von Heizmitteln zur Erwärmung der aus der Form-Gedächtnis-Legierung gefertigten Federn ist bereitgestellt, wenn gemäß einer weiteren vorteilhaften Ausgestaltung des Gegenstandes der Erfindung vorgesehen ist, daß die Heizmittel als elektrische Widerstandsheizung ausgebildet sind.

Entsprechend einer nächsten bevorzugten Ausführungsform des Gegenstandes der Erfindung ist vorgesehen, daß die elektrische Widerstandsheizung am Gehäuse in wärmeleitendem Kontakt mit diesem festgesetzt ist. Durch eine derartige Anordnung der Widerstandsheizung ist diese stets sicher positionsrichtig zu den zu erwärmenden Federn angeordnet.

Nach einer weiteren bevorzugten Ausführungsform des Gegenstandes der Erfindung ist vorgesehen, daß die elektrische Widerstandsheizung als Widerstandsdraht ausgebildet ist, welcher am Ventilgehäuse mantelseitig in wärmeleitendem Kontakt festgesetzt ist.

Hierdurch ist eine besonders einfache und kostengünstige Kontaktierung der Widerstandsheizung ermöglicht. Zudem ist durch diese Anordnung vermieden, daß die Anschlüsse der elektrischen Widerstandsheizung aus dem Innenraum des Gehäuses nach außen geführt und abgedichtet werden müssen. Darüber hinaus besteht bei einer derartigen Anordnung der Widerstandsheizung nicht die Gefahr, daß diese unter Umständen dem zu steuerndem Medium ausgesetzt ist.

Besonders einfach und kostengünstig herstellen läßt sich ein Ventil, wenn nach einer letzten bevorzugten Ausführungsform des Gegenstandes der Erfindung vorgesehen ist, daß das Ventilgehäuse und das Ventilstellglied mit kreisförmigem Querschnitt ausgestattet ist.

Außerdem ermöglicht ein mit kreisförmigem Querschnitt ausgeführtes Ventilgehäuse auf besonders einfache Weise eine exakte Führung und Halterung der zum Bewegen des Ventilstellgliedes eingesetzten Spiralfedern aus der Form-Gedächtnis-Legierung.

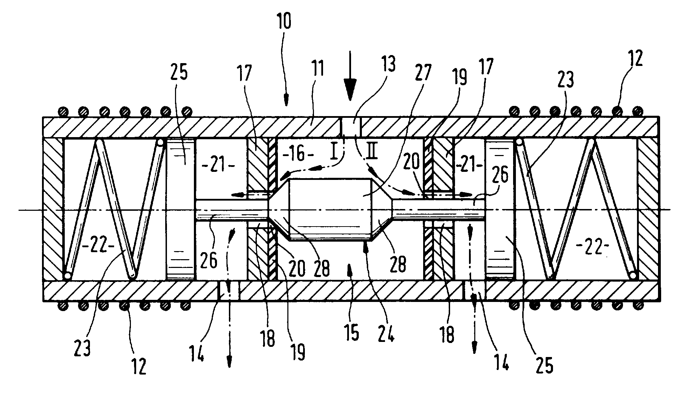

Die Erfindung ist in der nachfolgenden Beschreibung anhand eines in der beigefügten Zeichnung vereinfacht schematisch dargestellten 3/2-Wegeventiles erläutert.

Gemäß der Figur ist in vereinfachter schematischer Darstellung ein als 3/2-Wegeventil ausgeführtes, beispielsweise zur Steuerung von Kältemitteln bei Kältegeräten Anwendung findendes Ventil 10 in Schnittdarstellung gezeigt.

Das Ventil 10 weist ein aus gut wärmeleitendem Material gefertigtes Gehäuse 11 auf, welches im vorliegenden Fall im wesentlichen aus einem zylinderischen Rohrkörper gebildet ist, welcher an seinen Stirnseiten mit innerhalb seines Öffnungsquerschnittes angeordneten und mit seinen Wandungen flüssigkeitsdicht verlöteten Abdeckelementen versehen ist. Das Gehäuse 11, welches an seinen Endabschnitten mit einem wärmeleitenden Kontakt an seiner Mantelfläche festgesetzten, als Widerstandsdraht ausgebildeten Heizmittel 12 versehen ist, weist einen Zuflußanschluß 13 sowie zwei Abflußanschlüsse 14 auf, welche im vorliegenden Fall als in die Rohrwandung des Rohrkörpers eingebrachte Bohrungen ausgebildet sind. Das Gehäuse 11 weist einen im wesentlichen in fünf Abschnitte unterteilten Gehäuseinnenraum 15, innerhalb welchem ein annähernd mittig zum Zuflußanschluß 13 angeordneter Zuflußabschnitt 16 für das über den Zuflußanschluß 13 in den Gehäuseinnenraum 15 einströmende Strömungsmedium vorgesehen ist. Der Zuflußabschnitt 16 ist durch an der inneren Mantelfläche des Rohrkörpers festgesetzte, scheibenartig ausgeführte Trennwände 17 begrenzt, durch welche die Abflußanschlüsse 14 aus dem Zuflußabschnitt 16 ausgegrenzt sind. Die Trennwände 17 sind in ihrem Zentrum mit einer als Strömungsweg 18 dienenden Durchgangsbohrung versehen und weisen an ihren im Zuflußabschnitt 16 zugewandten Seite scheibenartig ausgeführte, beispielsweise aus einem Elastomer gefertigte Dichtelemente 19 auf, welche wie die Trennwände 17 in ihrem Zentrum mit einem als Durchgangsbohrung ausgeführten Strömungsweg 20 versehen sind. An den Zuflußabschnitt 16 schließt sich beiderseits ein jeweils einen der Abflußanschlüsse 14 aufweisende, vom Zuflußabschnitt 16 durch die Trennwände 17 getrennter Abflußabschnitt 21 an. Zu diesen benachbart ist im Bereich des Heizmittels 12 ein Aufnahmeabschnitt 22 zur Einbringung von als Stellmittel dienende, aus einer Form-Gedächtnis-Legierung gefertigten Druckfedern 23 vorgesehen, welche mit dem Außendurchmesser ihrer Windungen an der inneren Rohrmantelfläche des Rohrkörpers geführt sind und welche sich gehäuseseitig an den stirnseitig in den Rohrkörper eingesetzten Abdeckelementen abstützen. Zur Abstützung des anderen Endes der Federn 23 dient ein zu einem Ventilstellglied 24 gehörendes scheibenartiges Führungselement 25, welches innerhalb des Gehäuseinnenraums 15 entlang der inneren Mantelfläche des Rohrkörpers verschieblich geführt ist und welches als bewegliche Trennwand zwischen dem Abflußabschnitt 21 und dem Aufnahmeabschnitt 22 dient. Das Führungselement 25 ist abflußabschnittsseitig über ein Verbindungselement 26 einstückig mit einem kreiszylindrisch ausgebildeten, innerhalb des Zuflußabschnittes 16 angeordneten Ventilstellglied 27 verbunden, welcher an seinen den Verbindungselementen 26 zugewandten Stirnseiten je einen Dichtkegel 28 aufweist.

Soll das Ventilstellglied 24 von seiner ersten Arbeitsstellung, in welcher es den Strömungsweg 1 freigibt, in seine zweite, den Strömungsweg II freigebende Arbeitsstellung bewegt werden, so ist die dem versperrten Strömungsweg II zugeordnete Widerstandsheizung in einen elektrischen Stromkreis zu schalten, um im Bereich des Heizmittels eine starke partielle Erwärmung des Rohrkörpers und somit der aus der Form-Gedächtnis-Legierung gefertigten Druckfeder 23 zu erreichen. Durch die Aufheizung der dem Strömungsweg II zugeordneten Druckfeder 23 lenkt sich diese und nimmt ihre ursprüngliche Länge ein, wodurch infolge des Kraftangriffes der Feder an dem als Federteller dienende Führungselement 25 das Ventilstellglied 27 aus seiner momentanen Dichtposition, in welcher sein Dichtkegel 28 flüssigkeitsdicht gegen das Dichtungsprofil 19 anliegt, entgegen der Federkraft der unbeheizten Feder in seine zweite Dichtposition verschoben. In dieser liegt der der unbeheizten Feder zugewandte Dichtkegel flüssigkeitsdicht an dem ihm zugewandten Dichtungselement 19 an, wodurch der Strömungsweg I verschlossen ist, während der Strömungsweg II nunmehr geöffnet ist. Die anhand des Heizmiffels 12 kurzzeitig aufgeheizte Feder aus der Form-Gedächtnis-Legierung übt durch die Aufheizung auf das Ventilstellglied über das Führungselement eine deutlich über der Rückstellkraft der nicht aufgeheizten Feder liegende Verstellkraft aus, so daß das in seine andere Schließstellung gedrängte Ventilstellglied 24 mit seinem Dichtkegel 28 eine verhältnismäßig große Dichtkraft auf das elastisch formbare Dichtungselement 19 ausübt.

In Abwandlung von dem dargestellten und beschriebenen Ausführungsbeispiel ist es auch möglich, die Heizmittel 12 unmittelbar den aus Form-Gedächtnis-Legierung gefertigten, als Stellmittel dienenden Federn 23 zuzuordnen.

## Patentansprüche

1. Ventil zur Steuerung von flüssigen oder gasförmigen Medien, mit wenigstens einen Zuflußanschluß und zwei Abflußanschlüsse aufweisenden Gehäuse, innerhalb welchem ein Ventilstellglied beweglich geführt ist, welches über Stellmittel gesteuert in zwei Arbeitsstellungen bringbar ist, in welchen das Ventilstellglied jeweils den Strömungsweg zwischen dem Zuflußanschluß und einem der Abflußanschlüsse freigibt, **dadurch gekennzeichnet**, daß die Stellmittel als aus wenigstens einer Form-Gedächtnis-Legierung gefertigten Feder (23) gebildet ist, welcher ein Heizmittel (12) zugeordnet ist, durch deren Heizung diese Feder (23) in ihre eingeprägte Form auslenkbar ist.

2. Ventil nach Anspruch 1, **dadurch gekennzeichnet**, daß zwei aus der Form-Gedächtnis-Legierung gefertigte Federn (23) vorgesehen sind, von denen jeweils eine an einer Seite des Ventilstellgliedes (24) angreifen.

3. Ventil nach Anspruch 1 oder 2, **dadurch gekennzeichnet**, daß die Federn (23) als Spiralfedern ausgeführt sind.

4. Ventil nach Anspruch 3, **dadurch gekennzeichnet**, daß die Spiralfedern als Druckfedern ausgebildet sind.

5. Ventil nach einem der Ansprüche 1 bis 4, **dadurch gekennzeichnet**, daß die Federn (23) im Zentrum der Längsachse des Ventilstellgliedes (24) oder konzentrisch um das Zentrum der Längsachse angreifen.

6. Ventil nach einem der Ansprüche 1 bis 5, **dadurch gekennzeichnet**, daß das Ventilstellglied (24) mit federtellerähnlichen Krafteinleitungsflächen (25) für die Federn (23) ausgestattet sind.

7. Ventil nach Anspruch 1, **dadurch gekennzeichnet**, daß die Heizmittel (12) als elektrische Widerstandsheizung ausgebildet sind.

8. Ventil nach Anspruch 7, **dadurch gekennzeichnet**, daß die elektrische Widerstandsheizung am Gehäuse (11) in wärmeleitendem Kontakt mit diesem festgesetzt ist.

9. Ventil nach Anspruch 7 oder 8, **dadurch gekennzeichnet**, daß die elektrische Widerstandsheizung als Widerstandsdraht ausgebildet ist, welcher am Ventilgehäuse (11) mantelseitig in wärmeleitendem Kontakt festgesetzt ist.

10. Ventil nach einem der Ansprüche 1 bis 9, **dadurch gekennzeichnet**, daß das Ventilgehäuse (11) und das Ventilstellglied (24) mit kreisförmigem Querschnitt ausgestattet sind.
